# EUROPÄISCHE PATENTSCHRIFT

(11) **EP 1 932 417 B1**
(45) Veröffentlichungstag und Bekanntmachung des Hinweises auf die Patenterteilung: **21.11.2012**
(21) Anmeldenummer: 07023663.3
(22) Anmeldetag: 06.12.2007
(51) Int. Cl.: A01D 43/08, A01D 89/00

(54) **Vorrichtung zur Aufnahme von am Boden liegendem Erntegut**
Device for collecting crops lying on the ground
Dispositif de saisie de récolte au sol

(30) Priorität: 15.12.2006 DE 102006059846
(43) Veröffentlichungstag der Anmeldung: 18.06.2008
(73) Patentinhaber: CLAAS Saulgau GmbH, 88348 Bad Saulgau (DE)
(72) Erfinder: Boll, Ulrich, 88348 Bad Saulgau (DE)
(74) Vertreter: Otten, Roth, Dobler & Partner

(56) Entgegenhaltungen:
- EP-A- 0 090 930
- EP-A- 0 543 164
- EP-A- 0 715 804
- DE-A1- 3 207 755
- DE-U1-202006 018 873

## Beschreibung

Die Erfindung betrifft eine vorrichtung zur Aufnahme von am Boden liegendem Erntegut, wie Gras, Heu, Stroh, Silage, Luzerne oder dergleichen nach dem Oberbegriff des Anspruchs 1.

Derartige Vorrichtungen werden üblicherweise als sogenannte "Pick-up" bezeichnet. Sie sind bei landwirtschaftlichen Maschinen im Einsatz, die am Boden liegendes Erntegut, wie Gras, Heu, Stroh, Silage, Luzerne oder dergleichen, aufnehmen und weiterverarbeiten. So sind beispielsweise sogenannte Selbstladewagen, Ballenpressen oder auch Feldhäcksler, die dergleichen Erntegut vom Boden aufnehmen, mit einer solchen "Pick-up" ausgestattet.

Bei handelsüblichen Aufnahmevorrichtungen sind mehrere Reihen von um eine Drehachse umlaufenden Förderzinken als Aufnahmeelemente vorgesehen, die über das zugehörige Fahrzeug angetrieben werden. Die Antriebswelle des Fahrzeugs befindet sich dabei naturgemäß neben der Bahnkurve der Förderzinken, so dass das Antriebsmoment auf die Förderzinken über ein Transmissionsgetriebe übertragen werden muss.

Bei den bekannten Aufnahmevorrichtungen liegt die Transmission des Antriebs außenseitig außerhalb der Arbeitsbreite, wodurch die Gesamtbreite einer solchen Vorrichtung entsprechend breiter ist als die Arbeitsbreite der Vorrichtung, die durch die Breite der Zinkenreihen bestimmt wird.

Die außenseitige Anordnung derartiger Transmissionsgetriebe ist daher insofern von Nachteil, als dass die zur Verfügung stehende zulässige Transportbreite nicht für die Arbeitsbreite genutzt wird. So besteht z.B. die Gefahr, dass das der Aufnahmevorrichtung nachfolgende Fahrzeug randseitig über nicht aufgenommenes, am Boden liegendes Erntegut fährt.

Darüber hinaus ist mit herkömmlichen Aufnahmevorrichtungen keine Vergrößerung der Arbeitsbreite durch Anschluss weiterer Aufnahmevorrichtungen an der Außenseite möglich, da durch die dort befindlichen Transmissionsgetriebe eine Lücke ohne Förderzinken vorliegen würde, in der das Erntegut nicht oder nur unzuverlässig vom Boden aufgenommen werden könnte.

Dementsprechend sind Vorrichtungen mit mehreren Aufnahmeeinheiten, wie in den Druckschriften DE 43 41 610 A1, DE 695 23 719 T2 und EP 0640277 B1 aufgrund der fehlenden durchgehenden Arbeitsbreite nur in der Lage, vorab in Schwaden gelegtes Erntegut vollständig aufzunehmen.

Zudem ist in der Druckschrift DE 32 07 755 A1 ein Förderaggregat für landwirtschaftliche Ladewagen offenbart, wobei das Förderaggregat dem Pick-up nachgeschaltet ist. Das Pick-up, das die das am Boden liegende Erntegut aufnehmende Erntegut bzw. Förderzinken umfasst, ist unterhalb dem Förderaggregat angeordnet bzw. diesem vorgeschaltet. Förderkämme von derartigen Förderaggregaten weisen vergleichsweise große Abstände auf, wobei die Förderkämme das von der Pick-up stammende, bereits aufgenommene Erntegut zum einen zusammendrücken bzw. zusammenpressen und zum anderen im Allgemeinen mit Hilfe entsprechender statischer Messer bzw. Schneiden etwas zerkleinern und an den Laderaum bzw. Kratzboden weiterfördern.

Aufgabe der Erfindung ist es daher, eine Aufnahmevorrichtung zu schaffen, bei der die Nachteile des Standes der Technik vermieden werden.

Diese Aufgabe wird ausgehend von einer Aufnahmevorrichtung nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich die Erfindung dadurch aus, dass das Transmissionsglied, z.B. in Form eines Transmissionsgetriebes, für den Antrieb der das am Boden liegende Erntegut aufnehmende Aufnahmeelemente, z.B. in Form von Aufnahmezinken, innerhalb einer durchgehenden Arbeitsbreite der Aufnahmeelemente angeordnet ist.

Als Transmissionsglied im Sinne der Erfindung ist dabei jede Vorrichzung zu verstehen, mit der die erforderliche Antriebsenergie auf die Aufnahmeelemente übertragen wird.

Durch die erfindungsgemäße Verlagerung des Transmissionsgliedes ist es somit möglich, den bisher für das Transmissionsglied an der Außenseite benötigten Raum durch Verbreiterung der Verteilung der über die Arbeitsbreite verteilten Aufnahmeelemente zu nutzen. Bei Verwendung einer einteiligen Arbeitseinheit kann demnach die Arbeitsbreite so groß gestaltet werden, dass sie der Transportbreite der Aufnahmevorrichtung entspricht. Dies ist von besonderem Vorteil bei Arbeiten, bei denen das Erntegut nicht zu einem Schwad zusammengelegt ist, da in diesen Fall die Aufnahmevorrichtung über die maximale Transportbreite arbeiten kann, die in der Regel der Breite des zugehörigen Fahrzeugs entspricht. Der abgeerntete Bodenbereich ist somit in Relation zur Spurbreite des Fahrzeugs deutlich breiter, so dass das darauffolgende Fahrwerk weitestgehend über einen abgeernteten Bodenbereich fährt und somit weniger oder gar kein randseitig liegendes Erntegut niederdrückt.

Darüber hinaus kann mit einer erfindungsgemäßen mehrteiligen Aufnahmevorrichtung auch eine Verbreiterung der Arbeitsbreite durch Verwendung zweier oder mehrerer Arbeitseinheiten vorgenommen werden, die in Arbeitsstellung nebeneinander gestellt werden und für die Transportstellung in eine entsprechend abgeänderte Transportlage gebracht werden.

Mit einer erfindungsgemäßen Aufnahmevorrichtung kann nunmehr eine durchgehende Arbeitsbreite auch bei nebeneinander angeordneten Arbeitseinheiten geschaffen werden, da deren Verteilung der Aufnahmeelemente, z.B, in Form von Aufnahmezinken gar nicht oder nur durch eine unmaßgebliche Vergrößerung des Abstands zweier Aufnahmeelemente unterbrochen wird. Da das außenliegende Transmissionsglied (z.B. in Form eines Transmissionsgetriebes) fehlt, können die äußeren Aufnahmeelemente benachbarter Arbeitseinheiten wesentlich näher zueinander angeordnet werden.

In einer besonderen Ausführungsform der Erfindung wird wenigstens ein Transmissionsmitglied, z.B. als Transmissionsgetriebe für den Antrieb der Aufnahmeelemente in einen neben den umlaufenden Aufnahmeelementen verlaufenden Antriebsstrang integriert. Auf diese Weise ist eine Übertragung des Antriebsmomentes bzw. der Antriebskraft aus dem benachbart verlaufenden Antriebsstrang zu den Aufnahmeelementen innerhalb der Arbeitsbreite der Aufnahmevorrichtung möglich.

Im Falle eines mechanischen Antriebs erfolgt dabei die Transmission vorzugsweise über ein umlaufendes Zugmittel, beispielsweise eine Kette, einen Zahnriemen, einen Keilriemen oder dergleichen, da durch derartige Transmissionsglieder eine parallele Übertragung von Antriebsmomenten mit vergleichsweise geringer Dimensionierung in der Breite möglich ist.

Grundsätzlich können die Aufnahmeelemente jedoch auch hydraulisch und/oder elektrisch angetrieben werden, so dass in diesem Fall als Transmissionsglied ein entsprechender, hydraulischer und/oder elektrischer Motor gegebenenfalls unter Verwendung eines nachgeschalteten Getriebes, z.B. in Form eines Planetengetriebes, dient.

Der Anschluss des Antriebs der Aufnahmeelemente wird bevorzugt auf der Rückseite, bezogen auf die Fahrtrichtung der Aufnahmevorrichtung, vorgenommen, da an dieser Stelle der Anschluss unbeeinträchtigt vom in Fahrtrichtung vorne aufgenommenen Erntegut stattfinden kann.

In einer besonderen Ausführungsform der Erfindung werden zwei oder mehrere Transmissionsglieder für die Aufnahmeelemente vorgesehen. Dies ist insbesondere dann von Vorteil, wenn die Gesamtarbeitsbreite durch zwei oder mehrere Arbeitseinheiten zusammengesetzt wird. Derartige Arbeitseinheiten können in der Transportstellung abweichend von der Arbeitsstellung angeordnet werden, um bei möglichst großer Arbeitsbreite eine im Straßenverkehr zulässige, deutlich kleinere Transportbreite zu erzielen.

Im Falle einer derartigen Ausführungsform der erfindungsgemäßen Aufnahmevorrichtung erübrigt.sich durch die Verwendung zweier oder mehrerer entsprechender Transmissionsglieder ein unmittelbarer Anschluss des Antriebs der Aufnahmeelemente zwischen den einzelnen Arbeitseinheiten untereinander.

In einer besonderen Ausführungsform der Erfindung wird die Bewegung der Aufnahmeelemente während des Umlaufens gesteuert. Eine derartige Steuerung ist bei einem Teil der bekannten "Pick-up" bereits verwirklicht. Diese Steuerung verändert die Ausrichtung der Aufnahmeelemente, z.B. in Form von Aufnahmezinken, relativ zu der Drehachse, um die die Aufnahmeelemente umlaufen.

Durch eine solche Steuerung der Aufnahmeelemente wird der Materialfluss bei der Auf- und Mitnahme vom Boden bis hin zur Abgabe an eine nachgeschaltete Fördereinrichtung in bekannter Weise verbessert.

Eine derartige Steuerung der Aufnahmeelemente wird vorteilhafterweise mit Hilfe einer Kurvenbahn durchgeführt, über die die Winkelstellung der Aufnahmeelemente beim Umlaufen eingestellt wird. In einer erfindungsgemäßen Vorrichtung wird eine solche Kurvenbahn bzw. Steuerkurve bevorzugt ebenfalls innerhalb der Arbeitsbreite der Aufnahmeelemente untergebracht. Bei herkömmlichen Aufnahmevorrichtungen mit einer derartigen Steuerung wurde bislang auch die Steuereinheit, insbesondere die Steuerkurve, auf der Außenseite untergebracht, wodurch die Arbeitsbreite der Reihen von Aufnahmeelementen ebenfalls verkleinert wurde. Durch die Anordnung der Steuerung, insbesondere der Steuerkurve innerhalb der Arbeitsbreite der Aufnahmeelemente, wird auch dieser Nachteil verringert bzw. unterbunden.

In einer bevorzugten Ausführungsform der Erfindung werden dabei die Steuereinheit und das Transmissionsglied voneinander beabstandet angeordnet, wodurch eine regelmäßige Verteilung oder Anordnung von Aufnahmeelementen noch weniger beeinträchtigt wird. Bislang wurden beide Einheiten unmittelbar nebeneinander an der Außenseite angeordnet, wodurch sich ein entsprechender Platzbedarf ergab. Durch die separate Anordnung ist es nunmehr möglich, ein Transmissionsglied und eine davon beabstandete Steuereinheit so anzuordnen, dass der Abstand der Aufnahmeelemente gar nicht oder nur unmaßgeblich davon beeinflusst wird. Hierdurch lässt sich eine durchgehende Arbeitsbreite der Aufnahmeelemente leichter verwirklichen.

Die Aufnahmeelemente werden vorzugsweise in wenigstens einer quer zur Fahrtrichtung verlaufenden, sich über die Arbeitsbreite erstreckende Reihe angeordnet. Dies hat sich für eine gleichmäßige Aufnahme des Ernteguts bewährt und erleichtert zudem bei Bedarf die Ausbildung einer Steuerung wie oben angeführt.

Vorzugsweise werden zwei oder mehrere derartiger Steuereinheiten vorgesehen, was insbesondere bei einer Aufnahmevorrichtung aus zwei oder mehreren Arbeitseinheiten von Vorteil ist, da diese Arbeitseinheiten dadurch unabhängig voneinander gesteuert werden können.

Bevorzugt werden in Förderrichtung hinter den Aufnahmeelementen Querförderelemente oder eine Querfördereinheit, z.B. eine Förderschnecke, angeordnet. Eine derartige Querfördereinheit dient dazu, weiter außen mittels der Aufnahmeelemente aufgenommenes Erntegut zu einem davon beabstandeten Materialeinzug zu fördern. Dies ist beispielsweise bei einem Feldhäcksler oder aber auch, je nach Ausführung, bei einer Ballenpresse der Fall, wo das Material vor der Weiterverarbeitung zusammengeführt wird. Eine solche Querfördereinheit, insbesondere in Form einer Förderschnecke, wird dabei bevorzugt zentral angetrieben. Die hierzu erforderlichen Transmissionsglieder können dabei ohne weiteres neben dem zentralen Materialeinzug untergebracht werden, in dessen Bereich eine solche Querfördereinheit problemlos unterbrochen werden kann.

Im Falle der Verwendung zweier oder mehrerer, für den Übergang zwischen einer Arbeitsstellung und einer Transportstellung gegeneinander beweglichen Aufnahmeeinheiten werden vorteilhafterweise bei den außermittig angeordneten Aufnahmeeinheiten ebenfalls Querfördereinheiten, beispielsweise Querförderschnecken, vorgesehen. Diese Querförderschnecken sammeln das Erntegut von außen und leiten es sodann an eine oder mehrere weiter innen angeordnete Querfördereinheiten, beispielsweise an eine Querfördereinheit einer zentralen Aufnahmeeinheit weiter. Außenliegende Querfördereinheiten sind demnach vorteilhafterweise nicht' unterbrochen. Im Falle einer Querförderschnecke wird daher eine außenliegende Querförderschnecke vorzugsweise außen angetrieben. Hierzu kann am äußeren Ende eines neben den Zinkenreihen verlaufenden Antriebsstrangs ein Transmissionsgetriebe vorgesehen sein, das außen an die Querfördereinheit angeschlossen wird.

Eine erfindungsgemäße Aufnahmeeinheit ist bei unterschiedlichen Erntemaschinen einsetzbar. Diese kann beispielsweise bei Erntemaschinen, die an ein Zugfahrzeug, beispielsweise an einen Traktor anhängbar sind, verwendet werden. Beispielhaft werden hierzu anhängbare Ballenpressen oder sogenannte Selbstladewagen genannt.

Eine erfindungsgemäße Aufnahmevorrichtung ist jedoch ebenfalls vorteilhaft bei selbstfahrenden Erntemaschinen einsetzbar, beispielsweise bei Feldhäckslern oder dergleichen. Im Übrigen wäre bei Verwendung einer durch mehrere Aufnahmeeinheiten deutlich verbreiterten Aufnahmevorrichtung auch eine selbstfahrende Presse denkbar, bei der ein vorheriges Schwaden vor dem Aufnehmen und Pressen von Erntegut entfallen könnte.

Ein Ausführungsbeispiel der Erfindung ist in der Zeichnung dargestellt und wird anhand der Figuren nachfolgend näher erläutert.

Im Einzelnen zeigen
- Figur 1: eine Frontansicht eines Feldhäckslers mit dreiteiliger Aufnahmevorrichtung,
- Figur 2: eine Seitenansicht eines Feldhäckslers gemäß Figur 1 mit teilweise ausgeschnittener Seitenabdeckung der Aufnahmevorrichtung,
- Figur 3: eine perspektivische, teilweise geschnittene Darstellung einer einzelnen Aufnahmeeinheit gemäß der Erfindung,
- Figur 4: eine Draufsicht auf eine teilweise geschnittene einzelne Aufnahmevorrichtung gemäß Figur 3,
- Figur 5: eine Seitenansicht einer Aufnahmeeinheit gemäß Figur 4,
- Figur 6: eine Draufsicht von oben auf eine Aufnahmeeinheit gemäß Figur 4,
- Figur 7: eine Seitenansicht einer Aufnahmeeinheit gemäß Figur 6,
- Figur 8: eine Schnittdarstellung durch die Schnittebene VIII in Figur 4,
- Figur 9: eine Schnittdarstellung durch die Schnittebene IX in Figur 6,
- Figur 10: eine Schnittdarstellung durch die Schnittebene X in Figur 6,
- Figur 11: eine Schnittdarstellung entlang Schnittebene XI in Figur 6 und
- Figur 12: eine perspektivische schematische' Darstellung der gesamten Antriebsanordnung einer Aufnahmevorrichtung des Feldhäckslers gemäß Figur 1.

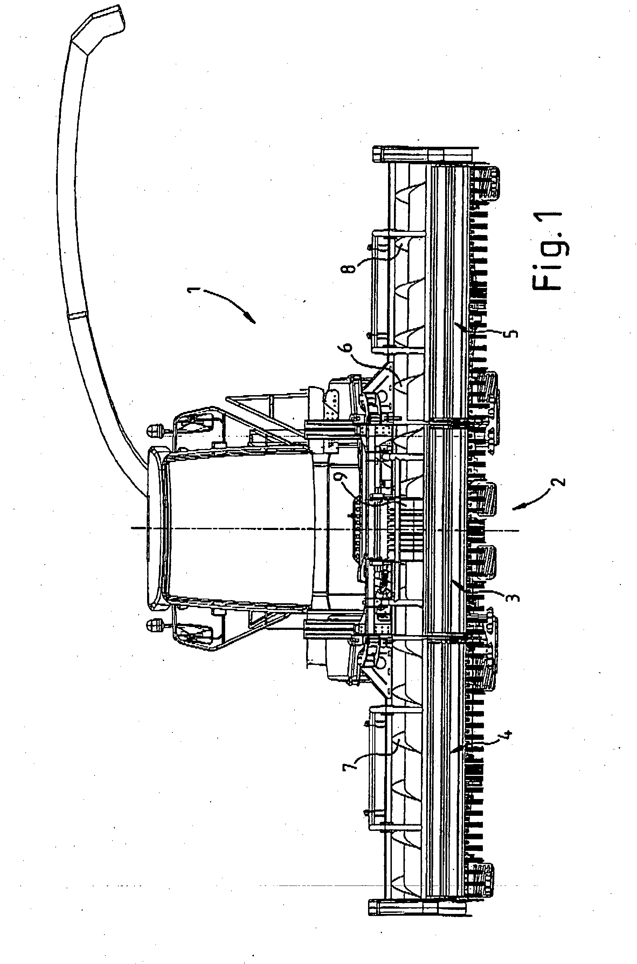

Der Feldhäcksler 1 gemäß Figur 1 trägt eine mehrteilige Aufnahmevorrichtung gemäß der Erfindung. Die Aufnahmevorrichtung 2 umfasst insgesamt drei Aufnahmeeinheiten, eine zentrale Aufnahmeeinheit 3 sowie zwei Seitenaufnahmeeinheiten 4, 5. Querförderschnecken 6, 7, 8 dienen dazu, aufgenommenes Erntegut einem zentralen Einzug 9. zuzuführen.

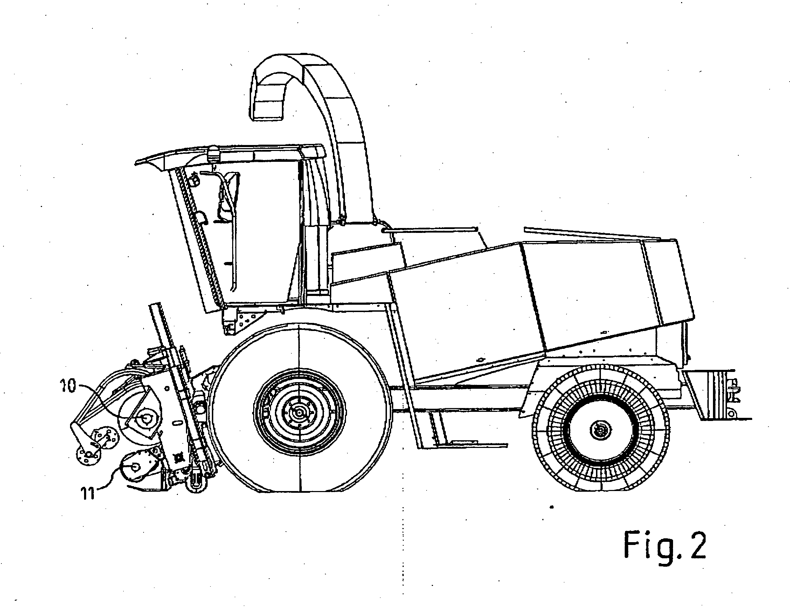

Die Lage der Drehachse 10 der Querförderschnecke 6, 7, 8 in Arbeitsstellung oberhalb der Drehachse 11 für umlaufende Aufnahme- und Förderzinken ist in der Darstellung gemäß Figur 2 gut erkennbar.

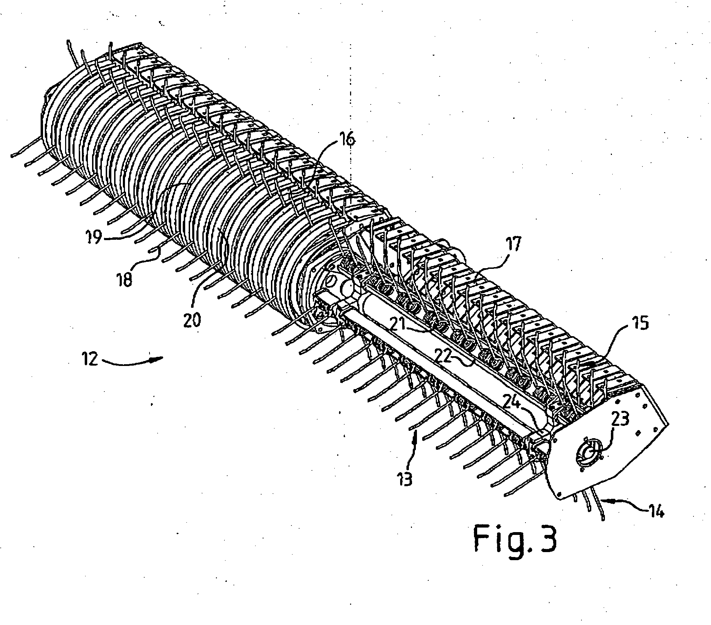

In Figur 3 ist ein Zinkenrotor 12 einer Aufnahmeeinheit dargestellt. Mehrere quer zur Fahrrichtung verlaufende Zinkenreihen 13, 14, 15, 16 dienen dazu, Erntegut vom Boden aufzunehmen und über Abstreifschlitze 17 der jeweiligen nachgeordneten Querförderschnecke 6, 7, 8 zu übergeben.

Die einzelnen Zinken 18 sind dabei in Schlitzen 19 zwischen Führungen 20 geführt. An den Führungen 20 gleitet das Erntegut durch die rotierende Bewegung der Zinken 18 nach oben, wo es in den Abstreifschlitzen 17 abgestreift wird.

Die Zinkenreihen 13, 14, 15, 16 bestehen aus Doppelzinken in Form von Federzinken, wie in der aufgeschnittenen rechten Hälfte des Zinkenrotors 12 zu erkennen ist. Die Federzinken 21 sind in U-Profilen 22 befestigt, die mit einer Drehachse 23 verbunden sind. Die Verbindung zwischen der Drehachse 23 und den U-Profilen 22 ist über kreuzartige Verbindungselemente 24 realisiert.

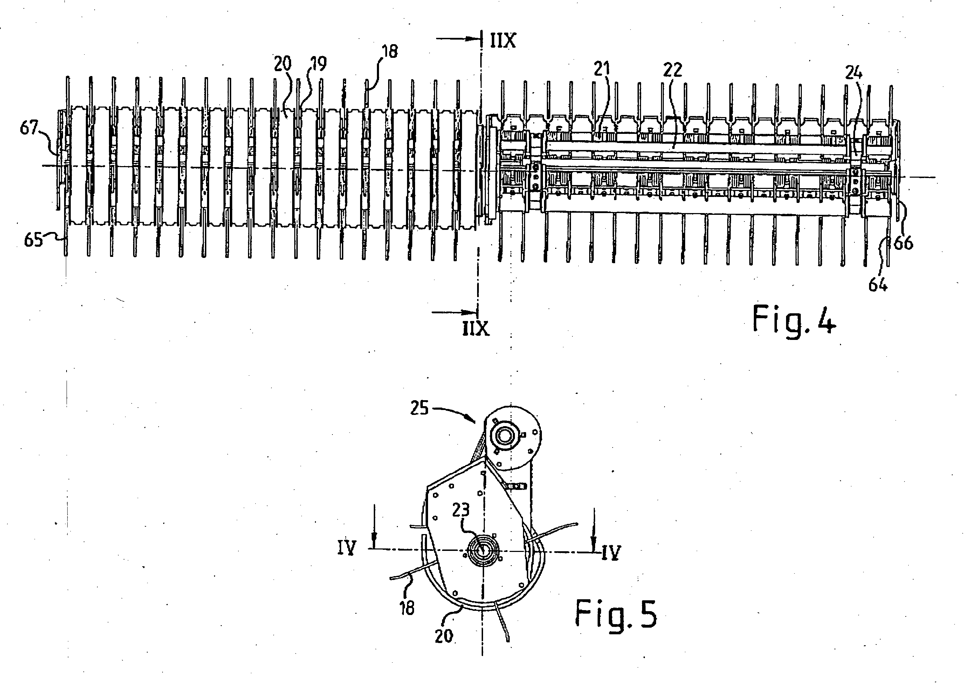

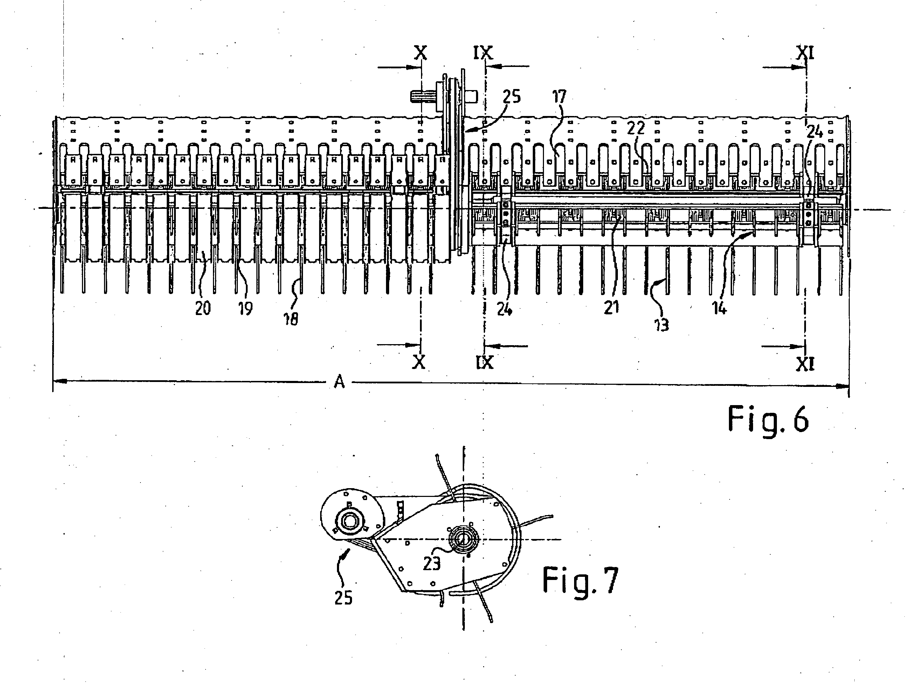

Die Drehachse 23 wiederum wird über ein Transmissionsgetriebe 25 angetrieben. In der perspektivischen Darstellung gemäß Figur 3 sowie in der Seitenansicht gemäß den Figuren 5 und 7 ist erkennbar, dass die Zinken 18 eine unterschiedliche Winkelorientierung aufweisen können.

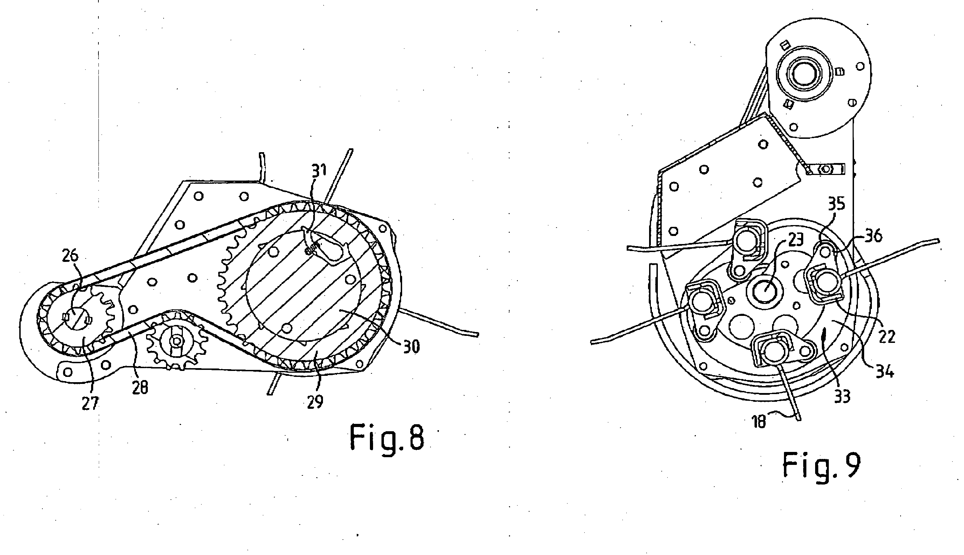

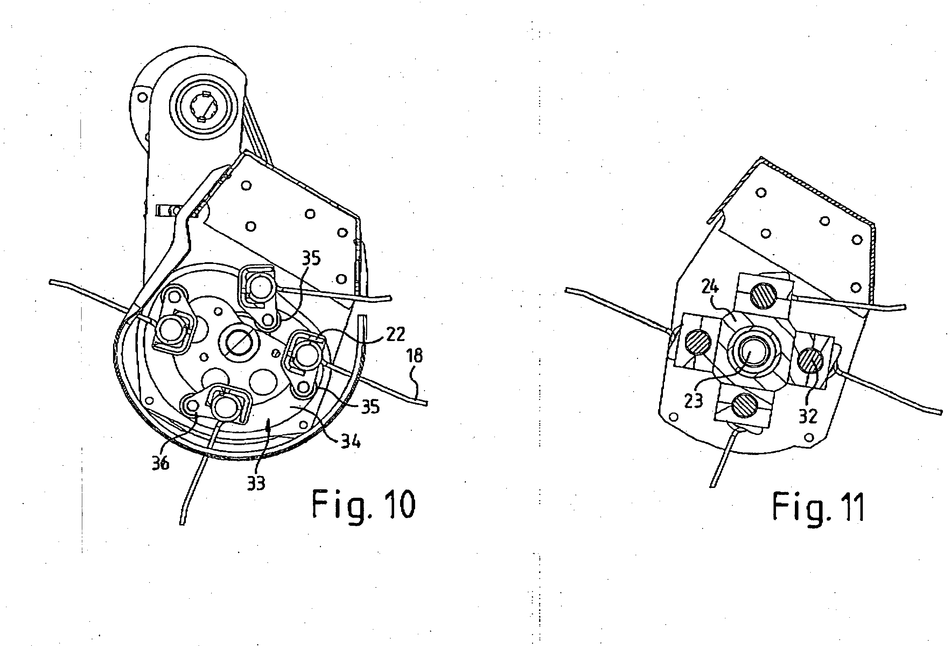

Das Transmissionsgetriebe 25 ist in Figur 8 als Schnittdarstellung mit einer Schnittebene VIII (vgl. Figur 4) dargestellt. Eine neben den Zinkenreihen drehende Antriebswelle 26 trägt ein Zahnrad 27, das mit einem Zahnriemen 28 kämmt. Der Zahnriemen 28 läuft über einen Zahnkranz 29, der eine Mitnehmerscheibe 30 antreibt, die durch Mitnehmer 31 im Zahnkranz 29 verankert ist. Die Mitnehmerscheibe 30 ist mit der zentralen Drehachse 23 des Zinkenrotors 12 verbunden. Auf der Drehachse 23 sitzen die Verbindungselemente 24, in denen die U-Profile 22 drehbar gelagert sind. Die Lagerzapfen 32 der U-Profile 22 sind beispielsweise in Figur 11 erkennbar, die einen Schnitt durch die Schnittebene IX (vgl. Figur 6) darstellt.

In den Figuren 9 und 10 ist die Steuereinheit 33 für die Winkelausrichtung der Zinken 18 erkennbar. In einer Kurvenbahn 34 laufen die Rollen 35, die an einem Steuerhebel 36 der U-Profile 22 befestigt sind. Während die U-Profile 22 über die Verbindungselemente 24 und die Drehachse 23 umlaufend angetrieben werden, folgen die Rollen 35 der Kurvenbahn 34 und verstellen so über den Steuerhebel 36 die Winkelorientierung der Zinken 18 in der gewünschten Weise. Auf diese Weise kann der Materialfluss vom Aufnehmen bis hin zum Abstreifen mittels der Zinken 18 verbessert werden.

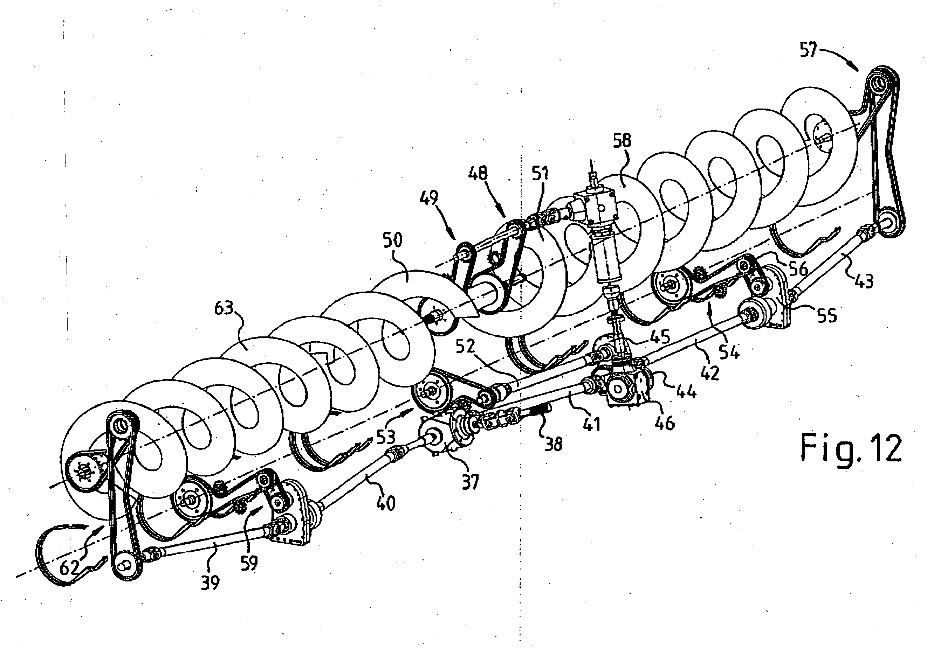

Figur 12 zeigt einen kompletten Antrieb für eine Aufnahmevorrichtung 2. Über ein zentrales Verteilergetriebe 37 mit Antriebswelle 38 wird die gesamte Aufnahmevorrichtung 2 vom jeweiligen Fahrzeug angetrieben; wobei die Antriebswelle 38 mit einer Zapfwelle verbindbar ist.

Das Verteilergetriebe 37 verzweigt in beide Richtungen und ist über Gelenkwellen 39 mit verschiedenen weiteren Getrieben verbunden. In Fahrtrichtung betrachtet nach rechts folgt zunächst ein Transmissionsgetriebe 44 sowie ein weiteres Transmissionsgetriebe 45. Die Transmissionsgetriebe 44, 45 können Zahnradgetriebe oder aber auch Riemengetriebe sein. An das Transmissionsgetriebe 44 ist ein Winkelgetriebe 46 angeschlossen, das eine Kraftübertragung nach oben über ein weiteres Winkelgetriebe 47 zu zwei Transmissionsgetrieben 48, 49 in Form von Riemengetrieben überträgt. Dieser Antriebsstrang dient dem Antrieb von beidseitig angeordneten Querförderschnecken 50, 51.

An das Transmissionsgetriebe 45 ist über eine längenvariable Gelenkwelle 51 ein Transmissionsgetriebe 53 angetrieben, das für den Antrieb des Zinkenrotors der zentralen Aufnahmeeinheit 3 dient.

Die zentrale Aufnahmeeinheit 3 (vgl. Figur 1) wird somit über beide beschriebene Antriebspfade im Hinblick auf ihre Zinken 18 sowie auf die Querförderschnecken 50, 51 angetrieben, wobei das Transmissionsgetriebe 53 als erfindungsgemäßes Transmissionsglied innerhalb der Arbeitsbreite der Aufnahme- und Förderzinken 18 der zentralen Aufnahmeeinheit 3 liegt.

In Fahrtrichtung betrachtet rechts folgt ein Transmissionsgetriebe 54 in Form eines Zahnradgetriebes 55 mit nachgeschaltetem Riemengetriebe 56 für den Antrieb des Zinkenrotors der Seitenaufnahmeeinheit 4. Ganz außen wiederum schließt sich ein Transmissionsgetriebe 57 für die Querförderschnecke. 58 der Seitenaufnahmeeinheit 4 an. Auch bei der Seitenaufnahmeeinheit 4 ist das durch das Transmissionsgetriebe 54 gebildete Transmissionsglied innerhalb der Arbeitsbreite der Aufnahme- und Förderzinken der Seitenaufnahme 4 angeordnet.

Vor allem durch die erfindungsgemäße Ausbildung der zentralen Aufnahmeeinheit 3 ist es möglich, die zentrale Aufnahmeeinheit 3 mit der Seitenaufnahmeeinheit 4 in gerader Verlängerung zu kombinieren, ohne dass sich eine maßgebliche Lücke zwischen den jeweiligen Aufnahme- und Förderzinken ergibt, d.h. eine derart zusammengesetzte Aufnahmevorrichtung 2 kann lückenlos über die gesamte Arbeitsbreite Erntegut vom Boden aufnehmen.

Auf der in Fahrtrichtung betrachtet linken Seite ist wiederum ein Transmissionsgetriebe 59 durch Aneinanderanordnung eines Zahnradgetriebes 60 mit einem Riemengetriebe 61 gebildet.

Dieses Transmissionsgetriebe 59 dient dem Antrieb des Zinkenrotors der linken Seitenaufnahmeeinheit 5. Am linken äußeren Ende des Antriebsstrangs wird schließlich über ein Transmissionsgetriebe 62, das wiederum als Riemengetriebe ausgelegt ist, der Antrieb für die linke Querförderschnecke 63 hergestellt.

Da auch das Transmissionsgetriebe 59 als erfindungsgemäßes Transmissionsglied für die linke Seitenaufnahmeeinheit 5 innerhalb der Arbeitsbreite des zugehörigen Zinkenrotors angeordnet ist, befindet sich im Übergang zur zentralen Aufnahmeeinheit 3 kein störendes Getriebe. Dadurch lässt sich auch die linke Seitenaufnahmeeinheit 5 neben der zentralen Aufnahmeeinheit 3 mit dieser kombiniert anordnen, ohne eine Lücke in der linken Anordnung zu verursachen, durch aufzunehmendes Futter nicht aufgenommen würde.

Wie in den Figuren 3, 4 und 6 ersichtlich ist, ist bei erfindungsgemäßer Anordnung eines Transmissionsgliedes, wie beispielsweise der Transmissionsgetriebe 53, 54 oder 59, innerhalb der Arbeitsbreite des jeweiligen Zinkenrotors 12 der jeweils außen befindliche Randzinken 64, 65 so nahe am jeweiligen Außenrand 66 des Zinkenrotors 12 bzw. der jeweiligen Aufnahmeeinheit 3, 4, 5 angeordnet, dass problemlos ein weiterer Zinkenrotor unmittelbar benachbart angeordnet werden kann, ohne eine Lücke in der Arbeitsbreite zu verursachen.

Wesentlich ist dabei vor allem die erfindungsgemäße Ausbildung der mittleren Aufnahmeeinheit. Die beiden Seiteneinheiten könnten grundsätzlich auch von der Außenseite her angetrieben werden, ohne dass beim Übergang zur mittleren Aufnahmeeinheit ein störendes Getriebe vorläge. Der erfindungsgemäße Antrieb der Seiteneinheiten, wie im Ausführungsbeispiel, hat jedoch durchaus ebenfalls konstruktive Vorteile.

Durch die besonderen Weiterbildungen der Erfindung, d.h. die von jeweiligen Transmissionsgliedern beabstandete Anordnung der Steuereinheit 33 sowie der Verbindungselemente 24 lassen sich diese Bauelemente derart platzsparend innerhalb eines Zinkenrotors 12 unterbringen, dass der Abstand der Förderzinken nicht maßgeblich beeinträchtigt wird.

### Bezugszeichenliste:

| | | | |
|---|---|---|---|
| 1 | Feldhäcksler | 30 | Mitnehmerscheibe |
| 2 | Aufnahmevorrichtung | 31 | Mitnehmer |
| 3 | zentrale Aufnahmeeinheit | 32 | Lagerzapfen |
| 4 | Seitenaufnahmeeinheit | 33 | Steuereinheit |
| 5 | Seitenaufnahmeeinheit | 34 | Kurvenbahn |
| 6 | Querförderschnecke | 35 | Rolle |
| 7 | Querförderschnecke | 36 | Steuerhebel |
| 8 | Querförderschnecke | 37 | Verteilergetriebe |
| 9 | Einzug | 38 | Antriebswelle |
| 10 | Drehachse | 39 | Gelenkwelle |
| 11 | Drehachse | 40 | Gelenkwelle |
| 12 | Zinkenrotor | 41 | Gelenkwelle |
| 13 | Zinkenreihe | 92 | Gelenkwelle |
| 14 | Zinkenreihe | 43 | Gelenkwelle |
| 15 | Zinkenreihe | 44 | Transmissionsgetriebe |
| 16 | Zinkenreihe | 45 | Transmissionsgetriebe |
| 17 | Abstreifschlitz | 46 | Winkelgetriebe |
| 18 | Zinken | 47 | Winkelgetriebe |
| 19 | Schlitz | 48 | Transmissionsgetriebe |
| 20 | Führung | 49 | Transmissionsgetriebe |
| 21 | Federzinken | 50 | Querförderschnecke |
| 22 | U-Profil | 51 | Querförderschnecke |
| 23 | Drehachse | 52 | Gelenkwelle |
| 24 | Verbindungselement | 53 | Transmissionsgetriebe |
| 25 | Transmissionsgetriebe | 54 | Transmissionsgetriebe |
| 26 | Antriebswelle | 55 | Zahnradgetriebe |
| 27 | Zahnrad | 56 | Riemengetriebe |
| 28 | Zahnriemen | 57 | Transmissionsgetriebe |
| 29 | Zahnkranz | 58 | Querförderschnecke |
| 59 | Transmissionsgetriebe | | |
| 60 | Zahnradgetriebe | | |
| 61 | Riemengetriebe | | |
| 62 | Transmissionsgetriebe | | |
| 63 | Querförderschnecke | | |
| 64 | Randzinken | | |
| 65 | Randzinken | | |
| 66 | Außenwand | | |
| 67 | Außenwand | | |

## Patentansprüche

1. Vorrichtung zur Aufnahme von am Boden liegendem Erntegut, wie Gras, Heu, Stroh oder dergleichen, mit wenigstens einer Aufnahmeeinheit (3, 4, 5), die eine Mehrzahl über die Arbeitsbreite (A) verteilter, um eine Drehachse umlaufender, das am Boden liegende Erntegut aufnehmende Aufnahmeelemente (18) und einen Antrieb (25, 26, 37, 38, 53, 54, 59) für die Aufnahmeelemente (18) aufweist, der ein Transmissionsglied (25) zur Übertragung einer Antriebskraft bzw. eines Antriebsmomentes von einem neben den Aufnahmeelementen (18) liegenden Antriebselement (29, 30) auf die das am Boden liegende Erntegut aufnehmende Aufnahmeelemente (18) aufweist, **dadurch gekennzeichnet, dass** das Transmissionsglied (25) für die das am Boden liegende Erntegut aufnehmende Aufnahmeelemente (18) innerhalb einer durchgehenden Arbeitsbreite (A) der das am Boden liegende Erntegut aufnehmende Aufnahmeelemente (18) liegt.

2. Vorrichtung nach einem der vorgenannten Ansprüche **dadurch gekennzeichnet, dass** das Transmissionsglied in einen neben den umlaufenden Aufnahmeelementen (18) verlaufenden Antriebsstrang integriert ist.

3. Vorrichtung nach einem der vorgenannten Ansprüche **dadurch gekennzeichnet, dass** das Transmissionsglied als mechanisches Getriebe (25), als hydraulischer Motor oder als. Elektromotor ausgebildet ist.

4. Vorrichtung nach einem der vorgenannten Ansprüche **dadurch gekennzeichnet, dass** die Bewegung der Aufnahmeelemente (18) gesteuert ist.

5. Vorrichtung nach einem der vorgenannten Ansprüche **dadurch gekennzeichnet, dass** eine Kurvenbahn (34) als Kurvensteuerung für die Aufnahmeelemente (18) vorgesehen ist.

6. Vorrichtung nach einem der vorgenannten Ansprüche **dadurch gekennzeichnet; dass** die Kurvenbahn (34) innerhalb der Arbeitsbreite (A) der Aufnahmeelemente (18) vorgesehen ist.

7. Vorrichtung nach einem der vorgenannten Ansprüche **dadurch gekennzeichnet, dass** zwei oder mehrere Transmissionsglieder (25) und/oder zwei oder mehrere Kurvenbahnen (34) vorgesehen sind.

8. Vorrichtung nach einem der vorgenannten Ansprüche **dadurch gekennzeichnet, dass** in Förderrichtung hinter den Aufnahmeelementen (18) eine Querfördereinheit (6) vorgesehen ist.

9. Vorrichtung nach einem der vorgenannten Ansprüche **dadurch gekennzeichnet, dass** die Querfördereinheit (6) einer zentralen Aufnahmeeinheit (2) zentral angetrieben ist.

10. Vorrichtung nach einem der vorgenannten Ansprüche **dadurch gekennzeichnet, dass** zwei oder mehrere, für den Übergang zwischen einer Arbeitsstellung und einer Transportstellung gegeneinander bewegliche Aufnahmeeinheiten (3, 4, 5) vorgesehen sind.

11. Vorrichtung nach einem der vorgenannten Ansprüche **dadurch gekennzeichnet, dass** ein Transmissionsglied (48, 49) für die Querfördereinheit an den Antriebsstrang angeschlossen ist.

12. Vorrichtung nach einem der vorgenannten Ansprüche **dadurch gekennzeichnet, dass** ein außenliegendes Transmissionsglied(57 62) für den Antrieb einer Querfördereinheit (7, 8) einer Seitenaufnahmeeinheit (4, 5) vorgesehen ist.

13. Erntemaschine, die an ein Zugfahrzeug anhängbar ist, **dadurch gekennzeichnet, dass** eine Aufnahmevorrichtung (1) nach einem der vorgenannten Ansprüche vorgesehen ist.

14. Selbstfahrende Erntemaschine **dadurch gekennzeichnet, dass** eine Aufnahmevorrichtung (1) nach einem der vorgenannten Ansprüche vorgesehen ist.

## Claims

1. Device for picking up harvested crops lying on the ground, such as grass, hay, straw or the like, with at least one pick-up unit (3, 4, 5) which has a multiplicity of pick-up elements (18), which are distributed across the working width (A), rotate around a rotational axis, and pick up the harvested crops lying on the ground, and a drive (25, 26, 37, 38, 53, 54, 59) for the pick-up elements (18), which has a transmission element (25) for transmitting a driving force or a driving torque from a drive element (29, 30), lying next to the pick-up elements (18), to the pick-up elements (18) which pick up the harvested crops lying on the ground, **characterized in that** the transmission element (25) for the pick-up elements (18) which pick up the harvested crops lying on the ground lies within a continuous working width (A) of the pick-up elements (18) which pick up the harvested crops lying on the ground.

2. Device according to one of the aforesaid claims, **characterized in that** the transmission element is integrated into a drive train which extends next to the rotating pick-up elements (18).

3. Device according to one of the aforesaid claims,**characterized in that** the transmission element is designed as a mechanical transmission (25), as a hydraulic motor or as an electric motor.

4. Device according to one of the aforesaid claims, **characterized in that** the movement of the pick-up elements (18) is controlled.

5. Device according to one of the aforesaid claims,**characterized in that** a cam track (34) is provided as the cam control system for the pick-up elements (18).

6. Device according to one of the aforesaid claims,**characterized in that** the cam track (34) is provided within the working width (A) of the pick-up elements (18).

7. Device according to one of the aforesaid claims,**characterized in that** provision is made for two transmission elements, or a
plurality of transmission elements (25), and/or two cam tracks, or a plurality of cam tracks (34).

8. Device according to one of the aforesaid claims,**characterized in that** a cross conveyor unit (6) is provided behind the pick-up elements (18) in the conveying direction.

9. Device according to one of the aforesaid claims,**characterized in that** the cross conveying unit (6) of a central pick-up unit (2) is centrally driven.

10. Device according to one of the aforesaid claims,**characterized in that** two mutually movable pick-up units, or a plurality of mutually movable pick-up units (3, 4, 5), are provided for the transition between a working position and a transporting position.

11. Device according to one of the aforesaid claims, **characterized in that** a transmission element (48, 49) for the cross conveyor unit is connected to the drive train.

12. Device according to one of the aforesaid claims, **characterized in that** an outer transmission element (57, 62) is provided for the drive of a cross conveyor unit (7, 8) of a side pick-up unit (4, 5).

13. Harvesting machine, which can be hitched to a towing vehicle, **characterized in that** provision is made for a pick-up device (1) according to one of the aforesaid claims.

14. Self-propelled harvesting machine, **characterized in that** provision is made for a pick-up device (1) according to one of the aforesaid claims.

## Revendications

1. Dispositif pour le ramassage de matériel de récolte se trouvant sur le sol, comme de l'herbe, du foin, de la paille ou du matériel similaire, comprenant au moins une unité de ramassage (3, 4, 5) qui présente une pluralité d'éléments de ramassage (18) répartis sur la largeur de travail (A), tournant autour d'un axe de rotation, qui ramassent le matériel de récolte se trouvant sur le sol et un entraînement (25, 26, 37, 38, 53, 54, 59) pour les éléments de ramassage (18) qui présente un membre de transmission (25) pour transmettre une force d'entraînement ou un couple d'entraînement depuis un élément d'entraînement (29, 30) situé à côté des éléments de ramassage (18) vers les éléments de ramassage (18) ramassant le matériel de récolte se trouvant sur le sol, **caractérisé en ce que** le membre de transmission (25) pour les éléments de ramassage (18) ramassant le matériel de récolte se trouvant sur le sol est agencé à l'intérieur d'une largeur de travail traversante (A) des éléments de ramassage (18) ramassant le matériel de récolte se trouvant sur le sol.

2. Dispositif selon l'une quelconque des revendications précédentes, **caractérisé en ce que** le membre de transmission est intégré dans une chaîne d'entraînement s'étendant à côté des éléments de ramassage rotatifs (18).

3. Dispositif selon l'une quelconque des revendications précédentes, **caractérisé en ce que** le membre de transmission est réalisé en tant que rouage mécanique (25), en tant que moteur hydraulique ou en tant que moteur électrique.

4. Dispositif selon l'une quelconque des revendications précédentes, **caractérisé en ce que** le mouvement des éléments de ramassage (18) est commandé.

5. Dispositif selon l'une quelconque des revendications précédentes, **caractérisé en ce qu'**un chemin incurvé (34) est prévu en tant que commande de courbe pour les éléments de ramassage (18).

6. Dispositif selon l'une quelconque des revendications précédentes, **caractérisé en ce que** le chemin incurvé (34) est prévu à l'intérieur de la largeur de travail (A) des éléments de ramassage (18).

7. Dispositif selon l'une quelconque des revendications précédentes, **caractérisé en ce que** deux ou plusieurs membres de transmission (25) et/ou deux ou plusieurs chemins incurvés (34) sont prévus.

8. Dispositif selon l'une quelconque des revendications précédentes, **caractérisé en ce qu'**une unité de transport transversale (6) est prévue à l'arrière des éléments de ramassage (18) dans le sens de transport.

9. Dispositif selon l'une quelconque des revendications précédentes, **caractérisé en ce que** l'unité de transport transversale (6) est entraînée de façon centrale par une unité de ramassage centrale (2).

10. Dispositif selon l'une quelconque des revendications précédentes, **caractérisé en ce que** deux ou plusieurs unités de ramassage (3, 4, 5) mobiles l'une par rapport à l'autre pour la commutation entre une position de travail et une position de transport sont prévues.

11. Dispositif selon l'une quelconque des revendications précédentes, **caractérisé en ce qu'**un membre de transmission (48, 49) pour l'unité de transport transversale est relié à la chaîne d'entraînement.

12. Dispositif selon l'une quelconque des revendications précédentes, **caractérisé en ce qu'**un membre de transmission (57, 62) situé à l'extérieur est prévu pour l'entraînement d'une unité de transport transversale (7, 8) d'une unité de ramassage latérale (4, 5).

13. Moissonneuse qui peut être attelée à un véhicule de traction, **caractérisée en ce qu'**un dispositif de ramassage (1) selon l'une quelconque des revendications précédentes est prévu.

14. Moissonneuse autotractée, **caractérisée en ce qu'**un dispositif de ramassage (1) selon l'une quelconque des revendications précédentes est prévu.
